# EUROPÄISCHE PATENTANMELDUNG

(11) **EP 4 397 217 A1**
(43) Veröffentlichungstag der Anmeldung: **10.07.2024**
(21) Anmeldenummer: 23214571.4
(22) Anmeldetag: 06.12.2023
(51) Int. Cl.: A47J 27/00, A47J 45/06

(54) **GARGESCHIRR**

(30) Priorität: 04.01.2023 BE 202304999
(71) Anmelder: Miele & Cie. KG, 33332 Gütersloh (DE)
(72) Erfinder: Ennen, Volker, 32257 Bünde (DE)

(57) **Zusammenfassung**

Die Erfindung betrifft ein Gargeschirr (1) mit einem Gargeschirrboden (10) und mit einer Gargeschirrwandung (11), welche gemeinsam einen Garraum (12) bilden, wobei der Gargeschirrboden (10) und/oder die Gargeschirrwandung (11) zumindest abschnittsweise eine Vergussmasse (18) aufweist/aufweisen. Das Gargeschirr (1) ist dadurch gekennzeichnet, dass die Vergussmasse (18) wenigstens einen temperaturbeständigen Dämmzuschlag aufweist.

## Beschreibung

Die Erfindung betrifft ein Gargeschirr.

Der Trend beim heimischen Kochen geht immer weiter dazu, die Durchführung der Kochprozesse für den Benutzer einfacher, komfortabler und/oder sicherer hinsichtlich des gewünschten Kochergebnisses zu gestalten. Dies kann dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und/oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Die EP 1 280 443 B1 beschreibt ein elektronisches Bratpfannensystem mit einer Pfanne zum Bereiten von Speisen bzw. Lebensmitteln, einem Griff, der zur Bewegung bzw. Manipulation der Pfanne mit der Pfanne verbunden ist, einem oder mehreren Temperatursensoren, die mit der Pfanne verbunden sind, um Signale zu erzeugen, die eine Pfannencharakteristik bzw. mehrere Pfannencharakteristika angeben, und einer Anzeigeelektronik, die mit den Sensoren verbunden und in bzw. mit dem Griff vorgesehen ist, um wenigstens eine Angabe bzw. Anzeige der Pfannencharakteristika einem Benutzer der Pfanne zur Verfügung zu stellen. Die Anzeigeelektronik weist einen Prozessor auf, um die Signale zu verarbeiten, um Speisencharakteristika, welche Speisen entsprechen, die in der Pfanne bereitet werden, zu assoziieren, und die Anzeigeelektronik umfasst eine Benutzerschnittstelle zum Auswählen einer von mehreren Speisencharakteristika.

Die DE 20 203 566 U1 beschreibt ein Kochgefäß mit einem Griff mit einer Sensorelektronik, mit der wenigstens ein Temperatursensor verbunden ist. Der Temperatursensor ist am Griff vorgesehen. Der Griff ist zusammen mit dem Temperatursensor von dem Kochgefäß abnehmbar ausgebildet. Der Temperatursensor reicht im befestigten Zustand des Griffes an das Wandungsmaterial des Kochgefäßes in temperaturübertragender Weise. Der Griff bzw. die Sensorik weisen ein Display, vorzugsweise ein LC-Display, auf, das insbesondere zur Darstellung verschiedener Zustände oder Bedienvorgänge des Kochgefäßes ausgebildet ist. Der Griff bzw. die Sensorik weisen eine Steuerung, vorzugsweise mit einem Mikroprozessor, auf, wobei insbesondere in dem Mikroprozessor Kochprogramme enthalten sind. An dem Griff sind Schaltmittel oder dergleichen zur Betätigung der Temperaturanzeige oder einer Sensorik vorgesehen. In dem Griff ist eine Energieversorgungvorzugsweise mit einer entnehmbaren Batterie oder einem Akkumulator, vorgesehen.

Die EP 2 361 538 A1 beschreibt eine elektronische Pfanne mit einem Pfannenkörper, einem Griff und einer Stromerzeugung basierend auf der Differenz in der Temperatureinheit und eine Temperaturmesseinheit. Die Stromerzeugung basierend auf der Differenz der Temperatureinheit besteht aus einer Halbleiterkühlscheibe, einem spannungserhöhenden und geregelten Elektronikmodul und einer Energiespeichereinheit. Die Temperaturmesseinheit besteht aus einem Temperatursensor, einem Mikroprozessor, einer Leiterplatte und einer Flüssigkristallanzeige zur Temperaturanzeige. Der Temperatursensor ist direkt unter dem Schalenkörper angeordnet. Die Leiterplatte ist in der Kammer des Griffs angeordnet. Die mit dem Pfannenkörper verbundene Halbleiterkühlscheibe ist innerhalb der Kammer am Anschluss des Griffs und des Pfannenkörpers vorgesehen Die andere Oberfläche der Halbleiterkühlscheibe ist mit metallischen Wärmetauscherscheiben fest kontaktiert. Die Stromerzeugung aufgrund der Differenz in der Temperatureinheit, der Temperaturmesseinheit und der Flüssigkristallanzeige ist jeweils mit der Leiterplatte verbunden.

Nachteilig ist bei all diesen elektronischen Gargeschirren, dass eine sehr aufwendige Elektronik im Griff des Gargeschirres angeordnet werden muss, um die Funktionen umsetzen zu können. Dies kann zu entsprechenden Kosten durch die Entwicklung, Herstellung und Montage der Elektronik führen. Auch kann es erforderlich sein, die Elektronik aufgrund ihres Platzbedarfs im Griff anzuordnen, was die Anwendung derartiger Elektroniken bei Gargeschirren ohne Griff verhindern und auf Pfannen beschränken kann.

Dies gilt vergleichbar für andere Gargeschirre wie beispielsweise Töpfe, Woks und dergleichen, welche ebenfalls Elektronik und/oder Sensorik aufweisen können, welche nicht nur in einem Griff sondern auch zwischen den Wänden eines doppelwandigen Gargeschirrkörpers bzw. einer doppelwandigen Gargeschirrwandung oder zwischen einer Gargeschirrwandung und einer Abdeckung angeordnet sein kann.

In jedem Fall muss die Elektronik und/oder Sensorik auch z.B. vor Feuchtigkeit geschützt werden, was entsprechende Abdichtmaßnahmen bzw. Schutzmaßnahmen erforderlich machen kann, um das Gargeschirr insbesondere spülmaschinentauglich zu machen. Falls nämlich beim Reinigen Wasser in einen Hohlraum eines Gargeschirrs, beispielsweise eines Griffs, einer doppelten Wandung oder einer Abdeckung, eindringt und sich bei einem späteren Garvorgang stark erhitzt, kann Dampf innerhalb des Hohlraums entstehen. Wenn der Dampf nicht schnell genug entweichen kann, kann sich ein Druck aufbauen.

Daher sollte das Eindringen von Wasser in Hohlräume ohne größere Öffnungen verhindert werden. Dies kann z.B. durch eine Vergussmasse erfolgen.

Ein Vergießen derartiger Hohlräume bei Gargeschirren hat allerdings den Nachteil, dass eine relativ hohe Wärmekapazität einer massiven Vergussmasse die Messung der Sensoren beeinflussen kann. Des Weiteren kann eine massive Vergussmasse relativ schwer sein.

Ein Nachteil der klassischen Vergussmasse am Gargefäß ist somit eine vergleichsweise hohe Wärmeleitung aufgrund der Vergussmasse von der Wärmequelle zum Ort der Temperaturmessung, beispielsweise an der Gargeschirrwand. Somit können sich andere Wärmequellen wie beispielsweise durch elektromagnetische Felder gebildete Hotspots im Bereich des magnetisierbaren Gargeschirrbodens aufgrund der vergleichsweise guten Wärmeleitung auf den Messwert eines Temperatursensors der Gargeschirrwand auswirken, welcher eigentlich die Temperatur des Garguts im Garraum erfassen soll.

Nachteilig ist auch eine trägere Reaktion der Temperaturmessung auf Temperaturänderungen des Garguts aufgrund der vergleichsweise hohen Wärmekapazität der Vergussmasse.

Nachteilig ist ferner das zusätzliche Gewicht der Vergussmasse, welches das Gewicht des Gargeschirrs entsprechend erhöhen kann, was vom Benutzer als unangenehm empfunden werden kann.

Nachteilig ist des Weiteren die vergleichsweise geringe Wärmedämmung beim Einsatz der Vergussmasse als Dämmstoff, so dass eine gewünschte Wärmedämmung wiederum mit derartigen Vergussmassen nicht erreicht werden kann.

Der Erfindung stellt sich somit das Problem, ein Gargeschirr mit einer verbesserten Vergussmasse zur Verfügung zu stellen. Insbesondere sollen die volumenbezogene Wärmekapazität, die Wärmeleitfähigkeit und/oder das Gewicht der Vergussmasse reduziert werden. Zumindest soll eine Alternative zu den bekannten Vergussmassen bei Gargeschirren geschaffen werden.

Erfindungsgemäß wird dieses Problem durch ein Gargeschirr sowie durch eine Vergussmasse mit den Merkmalen des unabhängigen Anspruchs gelöst. Vorteilhafte Ausgestaltungen und Weiterbildungen der Erfindung ergeben sich aus den nachfolgenden abhängigen Ansprüchen.

Somit betrifft die Erfindung ein Gargeschirr mit einem Gargeschirrboden und mit einer Gargeschirrwandung, welche gemeinsam einen Garraum bilden, wobei der Gargeschirrboden und/oder die Gargeschirrwandung zumindest abschnittsweise eine Vergussmasse aufweist bzw. aufweisen. Unter einer Vergussmasse wird eine fließfähige Masse verstanden, welche zum Ausfüllen von Hohl- und Zwischenräumen, insbesondere von Elektronik, verwendet werden kann, um diese vor äußeren Einflüssen wie beispielsweise Klimaeinflüssen und aggressiven Medien zu schützen. Einer Vergussmasse kann fließfähig verarbeitet werden und anschließend aushärten. Dem Fachmann sind verschiedene Verfahren bekannt, wie eine solche Vergussmasse auch haftend auf Flächen aufgebracht werden kann, welche nicht Bestandteil eines Hohl- und Zwischenraums sind. In diesem Fall kann die Vergussmasse wie eine Beschichtung verwendet werden.

Das Gargeschirr ist dadurch gekennzeichnet, dass die Vergussmasse wenigstens einen temperaturbeständigen Dämmzuschlag aufweist. Dies können vorzugsweise Hohlkörper bzw. Hohlkugeln sein, wie weiter unten näher beschrieben werden wird. In jedem Fall kann bzw. können mittels eines temperaturbeständigen Dämmzuschlags das Gewicht und/oder die Wärmekapazität und/oder die Wärmeleitfähigkeit der Vergussmasse verringert werden.

Vorzugsweise kann der temperaturbeständige Dämmzuschlag als Zuschlagstoff einer Grundmasse der Vergussmasse eine vergleichsweise geringe volumenbezogene Wärmekapazität und/oder eine vergleichsweise gute Dämmwirkung haben. Insbesondere kann für einen positiven Effekt die volumenbezogene Wärmekapazität bzw. Wärmeleitfähigkeit kleiner sein als die eingesetzte Grundmasse der Vergussmasse. Das kann vor allem durch eingeschlossene Luft oder sonstiges eingeschlossenes Gas erreicht werden. Alternativ würde sich, falls ein massives Material als temperaturbeständiger Dämmzuschlag eine geringere volumenbezogene Wärmekapazität bzw. Wärmeleitung als die verwendete Grundmasse der Vergussmasse aufweist, dadurch auch der gleiche bzw. ein vergleichbarer Effekt einstellen. Durch umfangreichere Lufteinschlüsse kann sich ein vergleichsweise geringes Gewicht in vielen Fällen von alleine einstellen.

Vorzugsweise kann ferner erreicht werden, dass im eingebauten Zustand nicht alle Poren eines offenporigen temperaturbeständigen Dämmzuschlags mit Vergussmasse ausgefüllt werden, da dies einen negativen Einfluss auf die Wärmekapazität, auf die Dämmwirkung und/oder auf das Gewicht haben kann. Das kann dadurch erreicht werden, dass das Zuschlagmaterial von sich aus geschlossenporig ist, wie z.B. bei Polystyrolkügelchen. Alternativ kann die Viskosität des Grundmaterials bzw. der Grundmasse der Vergussmasse so gering sein, dass ein Eindringen des Grundmaterials in die Poren des offenporigen temperaturbeständigen Dämmzuschlags in größerem Umfang verhindert wird. Zusätzlich können auch keine größeren offenen Poren des offenporigen temperaturbeständigen Dämmzuschlags am Rand des offenporigen temperaturbeständigen Dämmzuschlags bzw. an der Schnittstelle von Vergussmasse und benachbarten Wandungen und dergleichen vorhanden sein, in welchen sich Wasser ansammeln kann, welches unter ungünstigen Verhältnissen verdampfen kann und dadurch ggf. das Material beschädigt.

In jedem Fall kann hierdurch eine vergleichsweise geringe volumenbezogene Wärmekapazität erreicht werden, welche an manchen Einbaupositionen die Trägheit des Temperatursignals verringern kann. Auch kann dies den Energieverbrauch verringern, insbesondere bei großflächigem Einsatz als Dämmung, da weniger Energie in die Erwärmung der Dämmung abfließen kann. Somit auch ist der Einsatz als Dämmschicht um ein Gargeschirr bzw. innerhalb des Garraums möglich, wie weiter unten noch näher beschrieben werden wird.

Zusätzlich oder alternativ kann eine geringere Wärmeleitung erreicht werden. Hierdurch kann der Wärmefluss beispielsweise von durch Streufeldern erwärmter Schirmung, sofern vorhanden und/oder von dem magnetisierbaren Gargefäßboden zum Temperaturmesselement verringert werden.

Zusätzlich oder alternativ kann ein geringeres Gewicht, insbesondere zur Minimierung des Gargefäßgewichts zur Verbesserung der Handhabbarkeit im täglichen Gebrauch, erreicht werden.

Gemäß einem Aspekt der Erfindung weist der temperaturbeständige Dämmzuschlag der Vergussmasse Hohlkörper, vorzugsweise Hohlkugeln, auf, vorzugsweise sind der temperaturbeständige Dämmzuschlag Hohlkörper, vorzugsweise Hohlkugeln. Dies kann eine Möglichkeit der Umsetzung darstellen. Dabei kann die Gas- bzw. Luftfüllung der Hohlkörper zum einen das Gewicht des temperaturbeständigen Dämmzuschlag sowie aufgrund der vergleichsweise geringen thermischen Leitfähigkeit zum anderen dessen Wärmeleitfähigkeit reduzieren. Aufgrund der vergleichsweise geringen Wärmekapazität der Gas- bzw. Luftfüllung kann auch die Wärmekapazität des temperaturbeständigen Dämmzuschlag reduziert werden. Die Größe der Hohlkörper kann an die Anwendung angepasst werden. Dies kann dahingehend erfolgen, durch welche Querschnitte die Vergussmasse mit den Hohlkörpern bei der Verarbeitung hindurchbewegt werden muss.

Gemäß einem weiteren Aspekt der Erfindung sind die Hohlkörper geschlossenporig ausgebildet. Dies kann ein Eindringen der Grundmasse der Vergussmasse, welche die Hohlkörper aufnimmt, in die Hohlkörper verhindern, so dass deren zuvor beschriebene Eigenschaften erhalten bleiben können. Des Weiteren kann so ein Eindringen von Feuchtigkeit in die Hohlkörper verhindert werden.

Gemäß einem weiteren Aspekt der Erfindung der Dämmzuschlag Glasschaum, Kunststoff, Aerogel, vorzugsweise Silikat-Aerogel, Silikon-Gummi, vorzugsweise mit Aerogel, vorzugsweise mit Silikat-Aerogel, kombiniertes Silikon-Gummi, Blähton und/oder Bimsstein. Dies können verschiedene Möglichkeiten der Umsetzung sein. Glasschaum kann Vorteile bezüglich der Temperaturbeständigkeit aufweisen und kann prinzipiell auch in relativ kleinen Partikelgrößen verfügbar sein. Kunststoffe können verwendbar sein, falls sie für den Ort der Anwendung die notwendige Temperaturbeständigkeit aufweisen. Silikat-Aerogel kann als eigenständiges Dämmmaterial herausragende Dämmeigenschaften aufweisen und entsprechend für die Verwendung bei Gargeschirren als Vergussmasse besonders geeignet sein. Insbesondere kann Silikat-Aerogel mit Silikon-Gummi kombiniert werden. Blähton kann bei ausreichend kleinen Partikelgrößen verwendbar sein. Dies gilt ebenso für Bimsstein, welche hinreichend klein gemahlen werden kann.

Gemäß einem weiteren Aspekt der Erfindung weist das Gargeschirr wenigstens eine Abdeckung auf, welche einen Hohlraum, vorzugsweise einen Hohlraum gegenüber einer Außenseite der Gargeschirrwandung, zumindest abschnittsweise, vorzugsweise vollständig, umschließt, wobei der Hohlraum abschnittsweise, vorzugsweise vollständig, von der Vergussmasse ausgefüllt wird. Dies kann eine Möglichkeit einer konkreten Anwendung darstellen.

Gemäß einem weiteren Aspekt der Erfindung ist bzw. sind im Hohlraum wenigstens ein Sensorelement und/oder eine Steuerungseinheit und/oder ein Element zur Lenkung magnetischer Felder und/oder ein Energiegewinnungselement angeordnet, welches bzw. welche von der Vergussmasse wenigstens abschnittweise, vorzugsweise vollständig, umschlossen ist bzw. sind. Dies kann die Anwendung der grundsätzlichen Eigenschaften einer Vergussmasse auf ein Gargeschirr ermöglichen, um dessen Elektronik zu schützen.

Gemäß einem weiteren Aspekt der Erfindung weist die Abdeckung und/oder eine Befestigungseinrichtung der Abdeckung wenigstens eine Sollbruchstelle und/oder ein Sicherheitsventil auf. Hierdurch kann eine zusätzliche Sicherheitsmaßnahme für den Fall geschaffen werden, dass die Vergussmasse den Hohlraum nicht zu 100% ausfüllt und Wasser eindringen kann. Dies kann beispielsweise durch die Ausbildung der Abdeckung mit zwei Schalen erfolgen, die sich bei Überdruck auftrennen können. Weitere mögliche Umsetzungen werden nachfolgend beschrieben.

Gemäß einem weiteren Aspekt der Erfindung weist die Abdeckung wenigstens eine Einfüllöffnung für die Vergussmasse auf. Diesem Aspekt der Erfindung liegt die Erkenntnis zugrunde, dass eine Vergussmasse, deren Grundmasse mit Füllstoffen eines temperaturbeständigen Dämmzuschlags angereichert ist, eine ausreichend große Einfüllöffnung benötigen kann. Dies kann insbesondere bei größeren Füllstoffteilchen der Fall sein. Um eine effektive Befüllung des Hohlraums zu gewährleisten, kann die Einfüllöffnung größer sein als die größten Füllstoffpartikel in der Vergussmasse, vorzugsweise um ein Vielfaches größer.

Gemäß einem weiteren Aspekt der Erfindung ist die verschlossene Einfüllöffnung als Sollbruchstelle und/oder als Sicherheitsventil ausgebildet. Somit können die beiden letzten Aspekte der Erfindung miteinander verbunden bzw. kombiniert werden, indem die Einfüllöffnung bzw. ein Verschlusselement für die Einfüllöffnung gleichzeitig als Sicherheitsventil bzw. als Sollbruchstelle wirken kann.

Ein Beispiel für eine solche Einrichtung kann ein Gargefäß mit einer seitlichen Abdeckung für Sensorik bzw. Elektronikelemente sein, welche von unten durch einen abnehmbaren Deckel verschlossen werden kann. Für das Befüllen der Abdeckung mit der Vergussmasse kann der Deckel abgenommen werden. Wenn das Volumen der Abdeckung mit der Vergussmasse aufgefüllt ist, kann der Deckel aufgesetzt werden.

Optional kann der Deckel durch die Vergussmasse gehalten werden, indem Halteelemente des Deckels in die Vergussmasse eintauchen und/oder der Deckel an der Vergussmasse klebt. Diese Halteelemente des Deckels für die Verankerung in der Vergussmasse und/oder von der Vergussmasse unabhängige Halteelemente wie z.B. Klips-Verschlüsse können so ausgelegt sein, dass sie im Falle einer Dampfbildung im Inneren des Volumens durch den sich aufbauenden Druck gelöst werden, bevor andere Elemente beschädigt werden. Dadurch kann der Deckel freigegeben werden und der Druck kann sich schnell und sicher über eine relativ große Öffnung abbauen.

Gemäß einem weiteren Aspekt der Erfindung ist die Vergussmasse zumindest abschnittsweise, vorzugsweise vollflächig, am Gargeschirrboden und/oder an der Gargeschirrwandung dem Garraum abgewandt angeordnet. Somit kann die Vergussmasse auch als Dämmung nach außen verwendet werden, sodass die verbesserten Eigenschaften der erfindungsgemäßen Vergussmasse auch dort bzw. auch so genutzt werden können.

Gemäß einem weiteren Aspekt der Erfindung weist die Vergussmasse zumindest abschnittsweise, vorzugsweise vollflächig, eine Schutzbeschichtung auf. Die Schutzbeschichtung kann dem Schutz vor äußeren Einflüssen dienen.

Die Erfindung betrifft auch eine Vergussmasse zur Verwendung bei einem Gargeschirr wie zuvor beschrieben. Hierdurch kann eine Vergussmasse zur Verfügung gestellt werden, um ein erfindungsgemäßes Gargeschirr wie zuvor beschrieben umzusetzen und nutzen zu können.

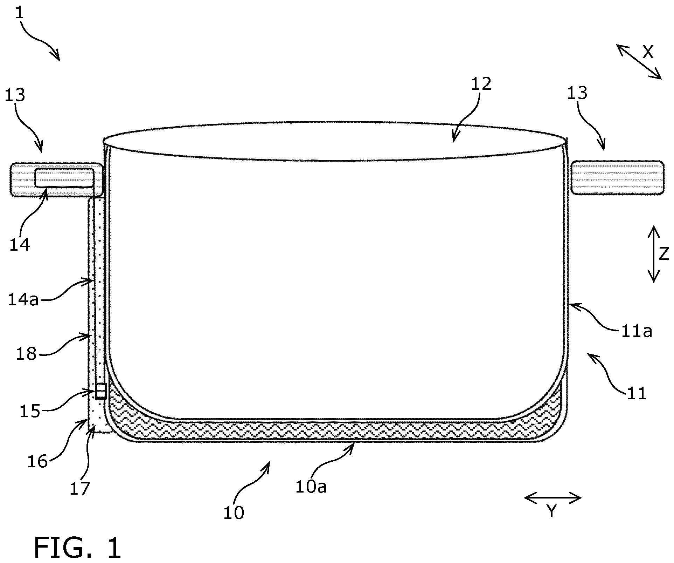

Ein Ausführungsbeispiel der Erfindung ist in der Zeichnung rein schematisch dargestellt und wird nachfolgend näher beschrieben. Es zeigt
- Figur 1: einen perspektivischen Querschnitt durch ein erfindungsgemäßes Gargeschirr.

Die o.g. Figur wird in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querrichtung Y bilden gemeinsam die Horizontale X, Y, welche auch als horizontale Ebene X, Y bezeichnet werden kann.

Figur 1 zeigt einen perspektivischen Querschnitt durch ein erfindungsgemäßes Gargeschirr 1. Das erfindungsgemäße Gargeschirr 1 wird am Beispiel eines Topfes 1 betrachtet.

Der Topf 1 weist einen Gargeschirrboden 10 auf, mit dessen Unterseite 10a der Topf 1 auf eine Kochstelle (nicht dargestellt) ausgestellt und dort erhitzt werden kann. Der Gargeschirrboden 10 ist doppelwandig und gefüllt (nicht bezeichnet) ausgebildet. Vom kreisrunden Rand (nicht bezeichnet) des Gargeschirrbodens 10 erstreckt sich eine Gargeschirrwandung 11 entlang der vertikalen Richtung Z senkrecht nach oben. Der Gargeschirrboden 10 und die Gargeschirrwandung 11 sind einstückig, d.h. integral, aus Metall ausgebildet. Der Gargeschirrboden 10 und die Gargeschirrwandung 11 umschließen gemeinsam einen Garraum 12.

Eine Außenseite 11a der Gargeschirrwandung 11 weist entlang der vertikalen Achse Z im oberen Bereich zwei einander diametral gegenüberliegende Gargeschirrgriffe 13 auf. Der in der Figur 1 dargestellte linke Gargeschirrgriff 13 nimmt in seinem Inneren eine Steuerungseinheit 14 auf, welche auch als Elektronik 14 bezeichnet werden kann. Von der Steuerungseinheit 14 verläuft ein Kabel 14a zu einem Sensorelement 15 in Form eines Temperatursensors 15, welcher entlang der vertikalen Achse Z im unteren Bereich der Gargeschirrwandung 11 an dessen Außenseite 11a nahe dem Gargeschirrboden 10 angeordnet ist, um dort die Temperatur des Topfes 1 zu erfassen.

Zum Schutz des Temperatursensors 15 samt Kabel 14a sind der Temperatursensor 15 und das Kabel 14a von einer Abdeckung 16 gegenüber der Umgebung umschlossen, so dass die Abdeckung 16 und die Gargeschirrwandung 11 einen Hohlraum 17 bilden, in welchem der Temperatursensor 15 und das Kabel 14a angeordnet sind. Der Hohlraum 17 ist vollständig von einer Vergussmasse 18 ausgefüllt, so dass der Temperatursensor 15 und das Kabel 14a vollständig von der Vergussmasse 18 umschlossen werden.

Erfindungsgemäß weist die Vergussmasse 18 einen temperaturbeständigen Dämmzuschlag auf, welcher als geschlossenporige Hohlkugeln umgesetzt wird. Die Hohlkugeln können Glasschaum, Kunststoff, Aerogel, vorzugsweise Silikat-Aerogel, Silikon-Gummi, vorzugsweise mit Aerogel, vorzugsweise mit Silikat-Aerogel, kombiniertes Silikon-Gummi, Blähton oder Bimsstein sein. In jedem Fall kann hierdurch eine Vergussmasse mit vergleichsweise geringer volumenbezogener Wärmekapazität, vergleichsweise geringer Wärmeleitfähigkeit und vergleichsweise geringem Gewicht geschaffen werden.

### Bezugszeichenliste (Bestandteil der Beschreibung)

- X: Längsachse; Tiefe; Länge
- Y: Querachse; Breite
- Z: vertikale Achse; Höhe
- X, Y: Horizontale; horizontale Ebene

- 1: Gargeschirr; Topf
- 10: Gargeschirrboden
- 10a: Unterseite des Gargeschirrbodens 10
- 11: Gargeschirrwandung
- 11a: Außenseite der Gargeschirrwandung 11
- 12: Garraum
- 13: Gargeschirrgriffe
- 14: Steuerungseinheit; Elektronik
- 14a: Kabel
- 15: Sensorelement; Temperatursensor
- 16: Abdeckung
- 17: Hohlraum zwischen Gargeschirrwandung 11 und Abdeckung 16
- 18: Vergussmasse

## Patentansprüche

1. Gargeschirr (1)
mit einem Gargeschirrboden (10) und mit einer Gargeschirrwandung (11), welche gemeinsam einen Garraum (12) bilden,
wobei der Gargeschirrboden (10) und/oder die Gargeschirrwandung (11) zumindest abschnittsweise eine Vergussmasse (18) aufweist/aufweisen,
**dadurch gekennzeichnet, dass**
die Vergussmasse (18) wenigstens einen temperaturbeständigen Dämmzuschlag aufweist.

2. Gargeschirr (1) nach Anspruch 1,
wobei der temperaturbeständige Dämmzuschlag der Vergussmasse (18) Hohlkörper, insbesondere Hohlkugeln, aufweist, insbesondere Hohlkörper sind.

3. Gargeschirr (1) nach Anspruch 2,
wobei die Hohlkörper geschlossenporig ausgebildet sind.

4. Gargeschirr (1) nach einem der vorangehenden Ansprüche,
wobei der Dämmzuschlag
Glasschaum,
Kunststoff,
Aerogel, vorzugsweise Silikat-Aerogel,
Silikon-Gummi, vorzugsweise mit Aerogel, vorzugsweise mit Silikat-Aerogel, kombiniertes Silikon-Gummi,
Blähton und/oder
Bimsstein
umfasst.

5. Gargeschirr (1) nach einem der vorangehenden Ansprüche
mit wenigstens einer Abdeckung (16), welche einen Hohlraum (17), vorzugsweise einen Hohlraum (17) gegenüber einer Außenseite (11a) der Gargeschirrwandung (11), zumindest abschnittsweise, vorzugsweise vollständig, umschließt,
wobei der Hohlraum (17) abschnittsweise, vorzugsweise vollständig, von der Vergussmasse (18) ausgefüllt wird.

6. Gargeschirr (1) nach Anspruch 5,
wobei im Hohlraum (17) wenigstens ein Sensorelement (18) und/oder eine Steuerungseinheit (14) und/oder ein Element zur Lenkung magnetischer Felder und/oder ein Energiegewinnungselement angeordnet ist/sind, welches/welche von der Vergussmasse (18) wenigstens abschnittweise, vorzugsweise vollständig, umschlossen ist/sind.

7. Gargeschirr (1) nach Anspruch 5 oder 6,
wobei die Abdeckung (16) und/oder eine Befestigungseinrichtung der Abdeckung wenigstens eine Sollbruchstelle und/oder ein Sicherheitsventil aufweist.

8. Gargeschirr (1) nach einem der Ansprüche 5 bis 7,
wobei die Abdeckung (16) wenigstens eine Einfüllöffnung für die Vergussmasse (18) aufweist.

9. Gargeschirr (1) nach Anspruch 7 und 8,
wobei die verschlossene Einfüllöffnung als Sollbruchstelle und/oder als Sicherheitsventil ausgebildet ist.

10. Gargeschirr (1) nach einem der vorangehenden Ansprüche,
wobei die Vergussmasse (18) zumindest abschnittsweise, vorzugsweise vollflächig, am Gargeschirrboden (10) und/oder an der Gargeschirrwandung (11) dem Garraum (12) abgewandt angeordnet ist.

11. Gargeschirr (1) nach Anspruch 10,
wobei die Vergussmasse (18) zumindest abschnittsweise, vorzugsweise vollflächig, eine Schutzbeschichtung aufweist.

12. Vergussmasse (18) zur Verwendung bei einem Gargeschirr (1) nach einem der vorangehenden Ansprüche.
